# EUROPEAN PATENT APPLICATION

(11) **EP 1 405 785 A2**
(43) Date of publication of application: **07.04.2004**
(21) Application number: 03022581.7
(22) Date of filing: 02.10.2003
(51) Int. Cl.: B62M 23/02

(54) **Motor-operated vehicle**

(30) Priority: 03.10.2002 JP 2002291370
(71) Applicant: YAMAHA HATSUDOKI KABUSHIKI KAISHA, Iwata-shi Shizuoka-ken (JP)
(72) Inventor: Ono, Tomohiro, Yamaha Hatsudoki K.K., Shizuoka-ken (JP); Terada, Junji, Yamaha Hatsudoki K.K., Shizuoka-ken (JP)
(74) Representative: Grünecker, Kinkeldey, Stockmair & Schwanhäusser Anwaltssozietät

(57) **Abstract**

The invention relates to an electric motor-operated vehicle comprising a rear arm 20 supporting a rear wheel 22, an electric motor 28 for driving the rear wheel 22, and a motor control unit 30 for operating the electric motor 28. The invention aims to improve the noise immunity of such a vehicle. Therefore, it is proposed that both of the electric motor 28 and the motor control unit 30 are located within the contour of the rear wheel 22 as seen in the side view of the vehicle.

## Description

The present invention relates to an electric motor-operated vehicle comprising a rear arm supporting a rear wheel, an electric motor for driving the rear wheel, and a motor control unit for operating the electric motor.

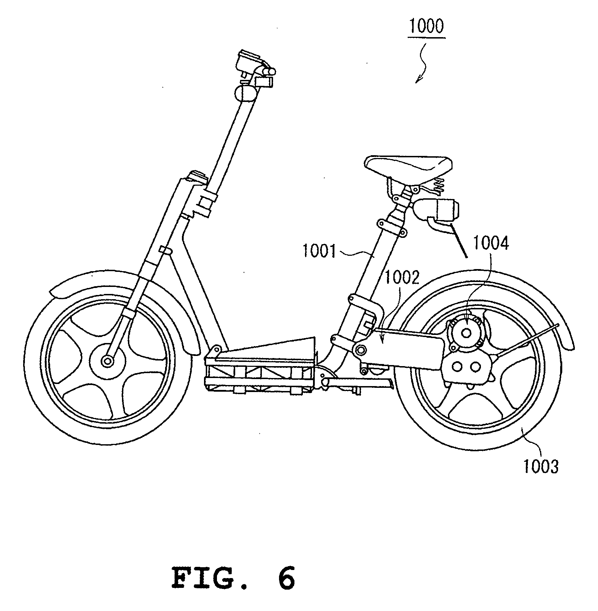

Electric motor-operated vehicles have been in practical use in recent years. FIG. 6 shows an electric motor-operated two-wheeled vehicle as an example of electric motor-operated vehicle as it is known from the laid-open Japanese patent application No. Hei 11-34965.

The electric m otor-operated vehicle 1000 shown in the drawing has an electric motor control unit 1002 pivoted at a middle lower part of a seat post 1001 of a frame to be able to swing about the pivot. An electric motor 1004 for driving the rear wheel 1003 is located on the rear end of the electric motor control unit 1002.

In the case of the conventional electric motor-operated two-wheeled vehicle 1000 described above, however, since the motor control unit 1002 is attached to the seat post 1001, the distance between the motor control unit 1002 and the electric motor 1004 is great as a natural result and so the noise immunity cannot be expected to be higher than a certain extent. Therefore, in some cases, measures against noise are required.

Accordingly, it is an object of the present invention to improve an electric motor-operated vehicle of the above kind in that it shows a high noise immunity.

For an electric motor operated vehicle of the above kind, this objective is solved in an inventive manner in that the electric motor and the motor control unit are located within the contour of the rear wheel of the rear arm as seen in the side view of the vehicle body.

Since the electric motor and the motor control unit are located within the contour of the rear wheel of the rear arm as seen in the side view of the vehicle body, the distance between the motor control unit and the electric motor is shortened and accordingly the noise immunity is improved.

Therein, preferably a front end of the rear arm is pivoted to swing on a main body of the vehicle and a rear end thereof supports the rear wheel.

Further preferably, the motor control unit may be provided with a motor driving circuit for driving the electric motor.

According to a preferred embodiment, the electric motor is positioned concentrically about a rotary shaft of the rear wheel.

In such an embodiment, the motor control unit and the electric motor may be provided within the rear arm.

Preferably, the electric motor and the motor control unit overlap each other as seen in the side view of the vehicle body.

Since the electric motor and the motor control unit overlap each other as seen in the side view of the vehicle body, the distance between the former and the latter is further shortened and accordingly the noise immunity is further improved.

According to a preferred embodiment, the electric motor is of an axial gap type.

Since projection in the lateral direction of the vehicle body is restricted, appearance of the rear arm is improved.

Preferably, the electric motor-operated vehicle comprises a power supply for supplying electric power to the electric motor, wherein the power supply is located near the pivot part of the rear arm and connected to the motor control unit.

Accordingly, the distance between the power supply and the motor control unit is made as small as possible and the noise immunity is further improved.

Moreover, the electric motor-operated vehicle may comprise an electric cable interconnecting the power supply and the motor control unit, wherein the electric cable is laid in the rear arm.

Accordingly, since the electric cable interconnecting the power supply and the motor control unit is laid within the rear arm, the cable is made short and the noise immunity is improved.

According to a further embodiment, the power supply is a battery which is positioned with its negative pole nearer to the pivot part than its positive pole, and the negative pole is connected to the motor control unit.

Since the ground line connecting the power supply to the motor control unit is made short, the noise immunity is improved.

Again, since the distance between the electric motor and the motor control unit is shortened and the length of the ground line interconnecting the negative pole of the battery and the motor control unit is shortened, the noise immunity is improved.

Therein, the motor control unit is preferably located more forward on the vehicle body than the electric motor.

Since the distance between the electric motor and the motor control unit is shortened and the length of the ground line interconnecting the negative pole of the battery and the motor control unit is shortened, the noise immunity is improved.

Most preferably, the motor control unit is located adjacent to the electric motor.

In such a case, since the distance between the electric motor and the motor control unit is shortened and the length of the ground line interconnecting the negative pole of the battery and the motor control unit is shortened, the noise immunity is improved.

Further preferred embodiments of the invention are subject to the subclaims.

In the following, the invention will be described in greater detail by means of preferred embodiments with reference to the drawings, wherein:
- FIG. 1: is a side view of an electric motor-operated two-wheeled vehicle as an embodiment of t he electric m otor-operated vehicle according to the present invention;
- FIG. 2: roughly shows the constitution around the rear arm 20 of the electric motor-operated two-wheeled vehicle 1;
- FIG. 3: shows the section as seen in the direction of arrows VA-VB in FIG. 2;
- FIG. 4: is a sectional view as seen in the direction of arrows UA and UB in FIG. 3;
- FIG. 5: is an electric circuit diagram of the electric motor-operated two-wheeled vehicle 1; and
- FIG. 6: shows the constitution of a conventional electric motor-operated two-wheeled vehicle.

An embodiment of the invention will be hereinafter described in reference to the appended drawings.

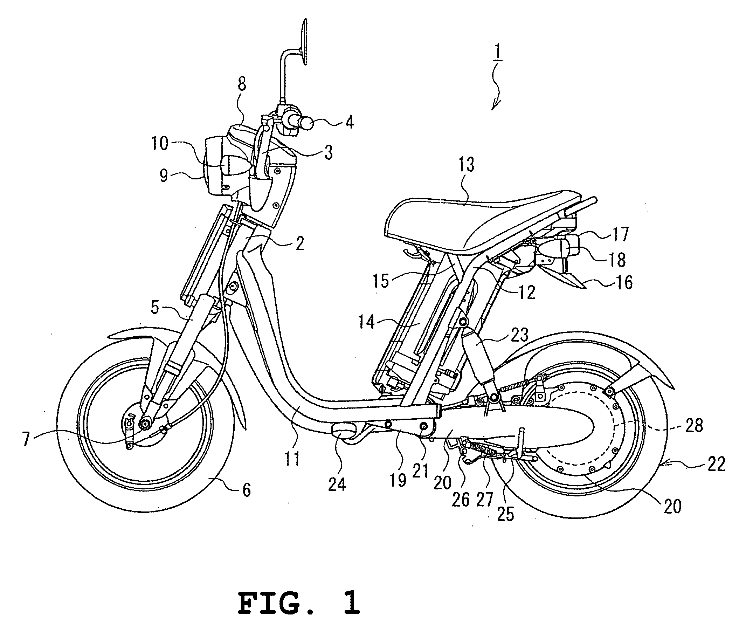

FIG. 1 is a side view of an electric motor-operated two-wheeled vehicle as an embodiment of the electric motor-operated vehicle according to the present invention.

The electric motor-operated two-wheeled vehicle 1 shown in FIG. 1 has a head pipe 2 at the upper front part of the vehicle body. A rotatable steering shaft (not shown) passes through the head pipe 2. Steering handlebars 3 are attached to the top end of the steering shaft. Both ends of the steering handlebars are provided with a handgrip 4. The handgrip 4 on the right-hand side (hidden behind in FIG. 1) constitutes a throttle grip that can be turned.

The top part of a front fork 5 having a pair of right and left branches is attached to the lower part of the head pipe 2. A front wheel 6 rotatable about a front wheel shaft 7 is attached to the lower ends of the branches of the fork 5. A meter 8 is attached in the center between the handlebars 3. A headlamp 9 is attached below the meter 8. Turn signal lights 10 (only one is shown in FIG. 1) are provided on both side of the headlamp 9.

A pair of right and left vehicle body frames 11 extends from the head pipe 2 toward the rear of the vehicle. That is, each of the vehicle body frames 11 is made of a pipe that extends from the head pipe 2 obliquely down rearward, arcs and further extends generally horizontally rearward. A pair of right and left vehicle body frames 12 extends obliquely upward from the rear ends of the vehicle body frames 11, so as to be interconnected behind the seat 13. A battery 14 is placed between the paired right and left vehicle body frames 12.

A seat stay (not shown) of an inverted U shape is connected to the right and left vehicle body frames 12 so as to be supported with a pair of stay members 15 (only one is shown in the drawing). The seat 13 that can be opened up and closed down is attached to the seat stay.

A tail lamp 17 is attached to the rear end surface of a rear fender 16 attached to the rear ends of the right and left vehicle body frames 12. Turn signal lamps 18 (only one is shown in the drawing) are located on right and left sides of the tail lamp 17.

A pair of rear arm brackets 19 (only one is shown in the drawing) is welded to the rear ends of the right and left vehicle body frames 11. The rear arm brackets 19 support the front end of a rear arm 20 to be capable of swinging (turning) about a pivot shaft 21. A rear wheel 22 as a traction wheel is rotatably supported at the rear end of the rear arm 20. The rear arm 20 and the rear wheel 22 are suspended with a rear shock absorber 23 on the vehicle body frame 12.

Footsteps 24 (only one is shown in the drawing) are attached below the right and left vehicle body frames 11. A side stand 25 that can swing about a shaft 26 and is pulled with a return spring 27 in the retracting direction is supported with the shaft 26 below the rear arm 20.

An electric motor 28 of the axial gap type in a thin shape flattened in lateral direction of the vehicle is placed in a generally round space at the rear end of the rear arm 20.

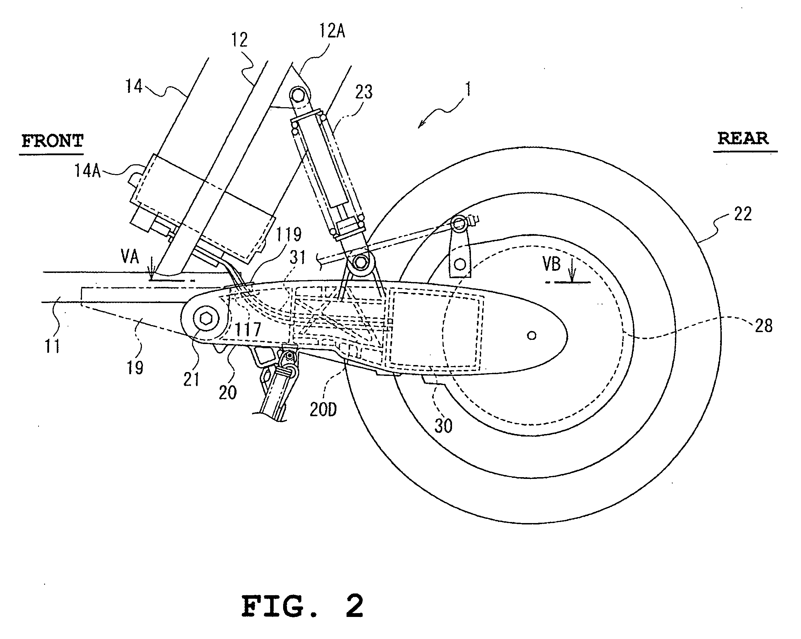

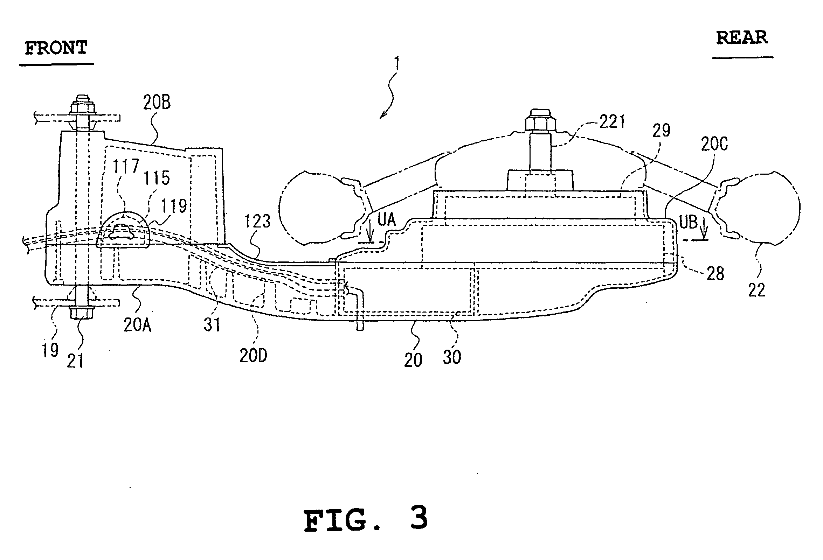

FIG. 2 roughly shows the constitution around the rear arm 20 of the electric motor-operated two-wheeled vehicle 1. FIG. 3 shows the section seen in the direction of arrows VA-VB in FIG. 2.

As shown in FIGS. 2 and 3, the electric motor 28 and a motor control unit 30 for drive-controlling the electric motor 28 are placed within the contour of the rear wheel 22 attached to the rear arm 20 as seen from a side of the vehicle body. In other words, the motor control unit 30 does not project to the vehicle body frame and placed within the contour of the rear wheel 22, so that noise immunity is improved.

Details of the constitution around the rear arm 20 of the electric motor-operated two-wheeled vehicle 1 will be described below. The electric motor 28 is installed in the rear end side of the rear arm 20 supported to swing on the rear arm brackets 19 of the electric motor-operated two-wheeled vehicle 1 at the front end side. The rear arm 20 is connected through the rear shock absorber 23 to a rear shock absorber bracket 12A disposed on the vehicle body frame member 12.

The front end side of the rear arm 20 is divided into two components 20A and 20B in the lateral direction of the electric motor-operated two-wheeled vehicle 1. To pass a sheathed electric cable interconnecting the electric motor 28 and the power supply or battery 14 mounted on the vehicle body frame 12 side, a through hole 117 is formed in the rear arm 20 by making a cut at least one of the components 20A and 20B at the divided part. The sheathed electric cable (hereinafter simply called an electric cable) 31 is made up of a power supply line 31A and a ground line 31B.

The rear arm 20, by means of its front end side, engages with the pivot shaft 21 located on the rear end side of the vehicle body frame 11 of the electric motor-operated two-wheeled vehicle 1 so as to rotate (swing) relative to the rear arm brackets 19 about the rotation center that is generally parallel to the rotation center of the rotary shaft 221 of the rear wheel 22.

The rear end side of the rear arm 20 supports the rear wheel 22 so that it is rotatable. The electric motor 28 for driving the rear wheel 22 is provided in the interior on the rear end side of the rear arm 20. The motor control unit 30 for drive-controlling the electric motor 28 is provided near the electric motor 28 and in the interior of the rear arm 20.

The rear arm 20 is divided into two components, as seen here for example, the component 20A extending long from the front end side to the rear end side of the rear arm 20 to form the rear arm 20, and the component 20B forming the rear arm 20 on the front end side. The component 20B is secured by means of tightening means such as bolts to the component 20A to form a single member.

Here, the component 20A has a hollow interior that is open toward the component 20B, and the component 20B has a hollow interior that is open toward the component 20A. When the component 20B is secured to the component 20A, the openings of both of the components 20A and 20B are closed with the opposing components, so that the inside space on the front end side of the rear arm 20 is separated from the outside space by means of the components 20A and 20B.

As shown in FIG. 3, a cut 115 is provided in part of the component 20B in the dividing area between the components 20A and 20B. That is to say, the cut 115 is provided through the external part of the component 20B that touches the component 20A. As the component 20B is secured to the component 20A, the cut 115 forms a hole 117 in the front end side of the rear arm 20 through which the spaces inside and outside the rear arm 20 are interconnected.

Incidentally, the cut 115 may be provided in both of the components 20A and 20B instead of providing in only the component 20B. In other words, the cut 115 may be provided in at least one of the components 20A and 20B. Alternatively, the rear arm 20 may be divided into three or more components on the front end side of the rear arm 20.

The electric cable 31 electrically interconnecting the electric motor 28 and the power supply or the battery 14 placed on the vehicle body frame 12 side of the electric motor-operated two-wheeled vehicle 1 passes through the through hole 117. In the electric motor-operated two-wheeled vehicle 1, the electric cable 31 interconnects the battery 14 and the motor control unit 30 that controls the drive of the electric motor 28. The battery 14 is held on its bottom end in a battery holding member 14A.

Next will be described the constitution of interconnecting the motor control unit 30 and the battery 14 through the electric cable 31 passing through the interior of the rear arm 20.

First in the state of the components 20A and 20B separated from each other, the motor control unit 30 is placed inside the component 20A of the rear arm 20. The electric cable 31 is extended to the front end side of the interior of the component 20A and led to the outside of the component 20A at a specified position on the front end side. Then, the cut 115 of the component 20B is matched to the position through which the electric cable 31 is led outside the component 20A, and the component 20B is secured to the component 20A.

The above manner of wiring eliminates the need for passing through the hole 117 a coupler for connecting and disconnecting the electric cable 31 to and from the battery 14 even if the coupler is made greater in outside diameter than the electric cable 31. Therefore, the work of laying the electric wire from the motor control unit 30 to the battery 14 is made easy even if the inside diameter of the through hole 117 (the cut 115) is made smaller than the outside diameter of the coupler. However, it is necessary to make the inside diameter of the through hole 117 (the cut 115) slightly greater than the outside diameter of the electric cable 31.

The through hole 117 in the rear arm 20 is made in a position that is near the center of swing and on the up side when the rear arm 20 is attached to the vehicle 1.

As shown in FIGS. 2 and 3, the through hole 117 is provided with a grommet 119 for protecting the electric cable 31 and filling the gap between the electric cable 31 and the through hole 117. The grommet 119 is a plate member made of elastic material such as rubber, of a certain thickness, of an outside shape nearly the same as the shape of the through hole 117, and with its center formed with a through hole for passing the electric cable 31.

Providing the grommet 119 around the rim of the through hole 117 as described above precludes the possibility of the electric cable 31 being rubbed and damaged with the inside edge of the through hole 117 as the rear arm 20 swings.

Since the gap between the electric cable 31 and the through hole 117 is filled up with the grommet 119, water and dust are less likely to enter through the hole 117 into the interior of the rear arm 20.

The electric cable 31 runs inside the rear arm 20 from the motor control unit 30 to the through hole 117 and out through the hole 117 formed in the top surface of the rear arm 20 to be connected to the battery 14. In other words, the length of part of the electric cable 31 extending outside the rear arm 20 is made short. Therefore, the electric cable 31 is made less likely to be hit and damaged with pebbles or the like flipped up from the road surface while the vehicle 1 is running.

Incidentally, when the grommet 119 is provided, it is preferable to pass the electric cable 31 that is not attached with a coupler through the hole in the grommet 119 and then attach the coupler.

The rear end part (the part rotatably supporting the rear wheel 22) of the rear arm 20 is divided into two parts, for example in the right and left directions of the vehicle, the component 20A and a component 20C. The rear end part of the rear arm 20 is reinforced by joining the component 20C to the component 20A.

Here, the component 20A has a hollow interior that is open toward the component 20C, and the component 20C has a hollow interior that is open toward the component 20A. When the component 20C is secured to the component 20A by means of bolts for example to form a single part, the openings of both of the components 20A and 20C are closed with the opposing components, so that the inside space on the rear end side of the rear arm 20 is separated from the outside space by means of the components 20A and 20C.

in this way, the electric motor 28 for driving the rear wheel 22 is installed in the space produced inside the rear end side of the rear arm 20. Incidentally, the output shaft of the electric motor 28 is approximately coaxial with the rotary shaft 221 of the rear wheel 22. The output shaft of the electric motor 28 is interlocked with the rotary shaft 221 of the rear wheel 22, through a reduction mechanism 29 made up for example of a planetary gear mechanism.

The motor control unit 30 is placed in part of the interior of the component 20A of the rear arm 20 near the electric motor 28. Therefore, it is difficult to provide ribs for increasing rigidity of the component 20A of the rear arm 20 inside the component 20A where the motor control unit 30 is placed.

Therefore, the rear arm 20 is arranged that part of the component 20A where the motor control unit 30 is placed is reinforced by securing the component 20C to the rear part of the component 20A, including its part where the motor control unit 30 is placed, so that the components form an integral part.

Therefore, simply securing the component 20C makes it possible to reinforce the component 20A without providing extra reinforcing ribs outside the component 20A, to make the appearance of the rear arm 20 simple, and to improve the appearance of the vehicle 1.

In the electric motor-operated two-wheeled vehicle 1, the electric cable 31 for supplying power to the electric motor 28 and to the motor control unit 30 is routed to enter the inside of the rear arm 20 through a point where the amount of extension and contraction of the electric cable 31 is a minimum when the rear arm 20 swings.

For example, the point where the electric cable 31 enters from the outside to the inside of the rear arm 20 is near the pivot shaft 21, the swing center of the front end side of the rear arm 20, on the top side of the rear arm 20.

Therefore, for example, when the rear arm 20 swings relative to the rear arm brackets 19, the amount of swing travel of the through hole 117 bored in the rear arm 20 is short and accordingly the amount of swing travel of the electric cable 31 passing through the hole 117 is small.

Less amount of swing travel of the electric cable 31 lowers the possibility of the electric cable 31 being damaged by the swing of the rear arm 20 even if the electric cable 31 is made thick in outside diameter and accordingly less flexible.

As described above, the rear arm 20 is made up of the component 20A extending long in the longitudinal direction of the vehicle 1, the component 20B secured to the front part of the component 20A to become an integral part, and the component 20C secured to the rear part of the component 20A to become an integral part.

The rear arm 20 is constituted that one end (located on the front side of the vehicle 1) of a covering member 123 located between the component 20B and the component 20C is held between one end of the component 20B and the component 20A when the component 20B is attached to the component 20A, and the other end (located toward the rear of the vehicle 1) of the covering member 123 is held between one end of the component 20C and the component 20A when the component 20C is attached to the component 20A.

One lateral side of the component 20A forms an opening extending long in the longitudinal direction of the component 20A, and the forward end portion of the opening is closed with the component 20B as described before, while its rearward end portion is closed with the component 20C. However, the opening in the middle part of the component 20A is not closed with either the component 20B or 20C. If the opening is left open, ribs 20D provided in the component 20A for reinforcing the rear arm 20 are shown from outside and may be detrimental to the appearance of the vehicle 1, and also the electric cable 31 laid in the component 20A is exposed and may be damaged with pebbles or the like flipped up while the vehicle 1 is running.

Therefore, the covering member 123 is attached to the rear arm 20 to close the opening in the middle part of the component 20A. However, since the covering member 123 is pressed and held in position with the components 20A, 20B, and 20C, extra tightening means such as bolts are unnecessary to secure the covering member 123. Since tightening means are unnecessary, man-hour for attaching the covering member 123 is reduced.

Next, the constitution of placing the electric motor 28 and the motor control unit 30 in the rear arm 20 is described.

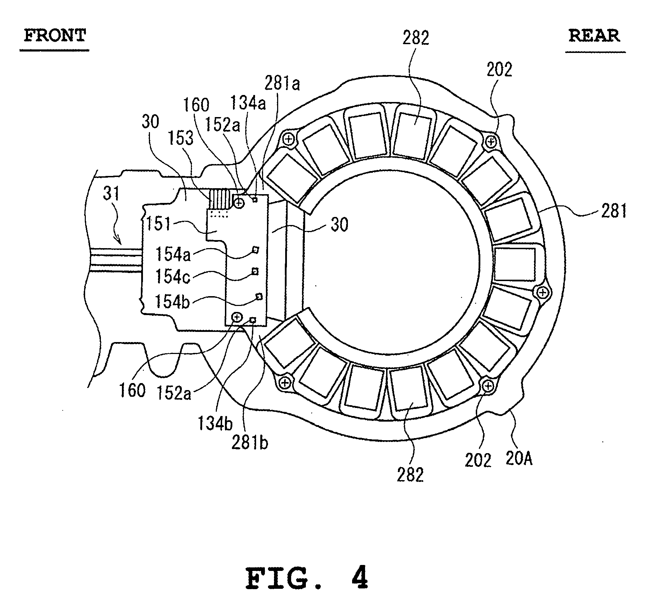

FIG. 4 is a sectional view as seen in the direction of arrows UA and UB in FIG. 3. The stator 281 of the electric motor 28 of the axial gap type is placed inside the component 20A of the rear arm 20 and secured with bolts 202 in several positions. The stator 281 is for driving a rotor (not shown). The stator 281 is made by placing a plural number of coils 282 along the arc of a circle that is partially cut off, and molded with plastic material or the like. To the cut-off portion of the circle extends encoder board attaching portions 281a and 281b made of the above-mentioned plastic material to be integral with the stator 281. Although not shown, the rotor is made up of a plural number of magnets bonded in a circular row to the surface of a rotor yoke (not shown) of a round plate shape, so that the magnets face the plural number of coils 282 through intervening gaps, with a small thickness in the vehicle width direction.

The encoder board attaching portions 281a and 281b are respectively provided with projections 134a and 134b. An encoder board 151 for detecting the rotary state of the rotor is placed and fixed to the encoder board attaching portions 281a and 281b. The encoder board 151 is provided with magnetic pole detecting elements 154a, 154b, and 154c such as hole sensors. Bored holes 152a and 152b are formed in positions on the encoder board 151 corresponding to the projections 134a and 134b, and the projections 134a and 134b are inserted into the holes 152a and 152b to position the encoder board 151. Therefore, relative position accuracy between the stator 281 and the encoder board 151 is enhanced. The encoder board 151 is secured to the encoder board attaching portions 281a and 281b by means of bolts 160, 160.

Owing to the constitution of the stator 281 in which a plural number of coils 282 are placed along the arc of a partially cut-off circle and the encoder board 151 is placed in the cut-off position of the circle, the rear wheel 22 is made compact.

While the shapes of the projections 134a and 134b are both square as seen from above, the size of the projection 134b as seen from above is made greater than that of the projection 134a. And the shape and size of the holes 152a and 152b are made respectively the same as the shape and size of the projections 134a and 134b. Therefore, even if one attempts to mount the encoder board 151 inside out, it cannot be mounted because the thick projection 134b cannot be inserted into the small hole 152a. Thus, incorrect attachment is prevented.

In the rear arm 20, the motor control unit 30 connected electrically both to the stator 281 of the electric motor 28 and to the battery 14 through the electric cable 31 is secured through an elastic member (not shown). The elastic member is made of rubber for example and used to prevent vibration from being transmitted to the motor control unit 30. The encoder board 151 and the motor control unit 30 are interconnected electrically through a wire harness 153 having flexibility. The wire harness 153 is of a sheathed type.

As shown in FIG. 4, while the motor control unit 30 is located near the electric motor 28 and at the forward side of the electric motor 28, a part of the motor control unit 30 is located on the arc where no coil 282 is present. In other words, the motor control unit 30 and the electric motor 28 overlap each other, and so the length of the electric wire interconnecting them is shortened as much as possible to provide a high noise immunity.

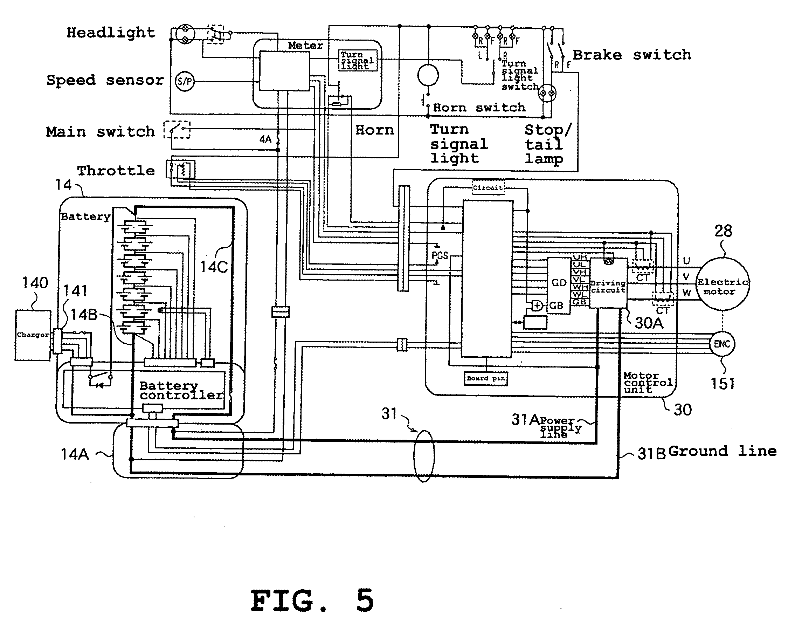

FIG. 5 is an electric circuit diagram of the electric motor-operated two-wheeled vehicle 1.

The electric cable 31 connected to the battery 14 is made up of the power supply line 31A and the ground line 31B, and connected to the electric motor driving circuit (driving circuit) 30A to supply electric power. Since the power supply line 31A and the ground line 31B are bundled, high noise immunity is provided. The battery 14 also supplies electric power to control circuits and other electric circuits in the motor control unit 30. The driving circuit 30A is controlled with the control circuit and in turn controls the electric motor 28 in three phases. The encoder board 151 detects the position of the rotor of the electric motor 28 and feeds back the detection results to the control circuit in the motor control unit 30. The motor driving circuit 30A is controlled with the feedback of detected results. The throttle, the main switch, and the meter of the vehicle 1 are connected to the control circuit in the motor control unit 30 to make control possible by communication with the operating sections of those components. The vehicle 1 is also provided with a headlight, a speedometer, a horn, turn signal lights and their switches, a stop lamp, a tail lamp, and a brake switch.

The battery 14 is made up of a plural number of cells interconnected in series parallel, with their anodes directed upward (in the direction of the seat 13) and cathodes downward (in the direction of the rear arm brackets 19) in the state of the battery 14 mounted on the vehicle 1. The battery 14 is supported on its lower end with the battery holding member 14A while the upper end is supported otherwise. That is, the battery 14 is placed so that the cathodes, rather than the anodes, are near the rear arm brackets 19 that support the rear arm 20. The lead 14B between the cathode of the lowermost cell and the battery holding member 14A is shorter than the lead 14C between the anode of the uppermost cell and the battery holding member 14A. Both leads 14B and 14C are respectively connected to the ground line 31B and the power supply line 31A, so as to provide high noise immunity.

The plural number of cells connected in serial parallel are wired from a connector 14 for a charger 140, so that the cells may be charged with the charger 140 connected to the connector 141.

While this embodiment is described in reference to the electric motor-operated two-wheeled vehicle, this invention may be applied also to any other types of electric motor-operated vehicle including three-wheeled or four-wheeled one. The electric motor may be of a radial gap type. While the rear arm in the above embodiment is described as supported directly on the vehicle body, indirect support by means of links may also be possible. The power supply may be fuel cells rather than the battery. In the case the pivot shaft of the rear arm is positioned above the power supply, the same effect as with the above arrangement is provided by positioning the cathode of the power supply on the upper side of the power supply.

As described above, since the electric motor and the motor control unit are located within the contour of the rear wheel of the rear arm as seen in the side view of the vehicle body, the distance between the electric motor and the motor control unit is made short and accordingly the noise immunity is improved. Since the electric motor and the motor control unit are not present in the front part of the rear arm, the rear arm may be made in a shape that is thin or curved to improve the appearance quality.

Further, since the electric motor and the motor control unit overlap each other as seen in the side view of the vehicle body, the distance between the electric motor and the motor control unit is further shortened and accordingly the noise immunity is further improved.

Furthermore, since the projection in the lateral direction of the vehicle body is restricted, the appearance of the rear arm is improved.

Therefore, the distance between the power supply and the motor control unit is made as small as possible and the noise immunity is improved.

Since the electric cable interconnecting the power supply and the motor control unit is laid within the rear arm, the cable is made short and the noise immunity is improved accordingly.

Moreover, since the ground line connecting the power supply to the motor control unit is made short, the noise immunity is improved.

Accordingly, since the distance between the electric motor and the motor control unit is shortened and the length of the ground line interconnecting the negative pole of the battery and the motor control unit is shortened, the noise immunity is improved.

Also, since the distance between the electric motor and the motor control unit is shortened and the length of the ground line interconnecting the negative pole of the battery and the motor control unit is shortened, the noise immunity is improved.

As described above, in order to provide an electric motor-operated vehicle having a high noise immunity, an electric motor-operated two-wheeled vehicle 1 is proposed comprising an electric motor 28 and a motor control unit 30 for controlling the electric motor 28 are located within the contour of a rear wheel 22 of a rear arm 20 as seen in the side view of the vehicle body. That is to say, the motor control unit 30 does not project up to the vehicle body frame but remains within the contour of the rear wheel 22 of the rear arm 20, so as to improve noise immunity.

In other words, an electric motor-operated vehicle comprises an electric motor for driving the rear wheel, a motor control unit provided with a motor driving circuit for driving the electric motor, and a rear arm with its front end pivoted to swing on the vehicle body and with its rear end supporting the rear wheel, wherein the electric motor and the motor control unit are located within the contour of the rear wheel of the rear arm as seen in the side view of the vehicle body.

Therefore, the electric motor-operated vehicle has a high noise immunity owing to well-devised positioning of an electric motor and a motor control unit.

## Claims

1. An electric motor-operated vehicle comprising a rear arm (20) supporting a rear wheel (22), an electric motor (28) for driving the rear wheel (22), and a motor control unit (30) for operating the electric motor (28), **characterized in that** both of the electric motor (28) and the motor control unit (30) are located within the contour of the rear wheel (22) as seen in the side view of the vehicle (1).

2. Electric motor-operated vehicle according to claim 1, **characterized in that** a front end of the rear arm (20) is pivoted to swing on a main body of the vehicle (1) and a rear end thereof supports the rear wheel (22).

3. Electric motor-operated vehicle according to claim 1 or 2, **characterized in that** the motor control unit (30) provided with a motor driving circuit (30A) for driving the electric motor (28).

4. Electric motor-operated vehicle according to at least one of the claims 1 to 3, **characterized in that** the electric motor (28) is positioned concentrically about a rotary shaft (221) of the rear wheel (22).

5. Electric motor-operated vehicle according to at least one of the claims 1 to 4, **characterized in that** the motor control unit (30) and the electric motor (28) is provided within the rear arm (20).

6. Electric motor-operated vehicle according to at least one of the claims 1 to 5, **characterized in that** the electric motor (28) and the motor control unit (30) overlap each other as seen in the side view of the vehicle (1).

7. Electric motor-operated vehicle according to at least one of the claims 1 to 6, **characterized in that** the electric motor (28) is of an axial gap type.

8. Electric motor-operated vehicle according to at least one of the claims 1 to 7, **characterized by** further comprising a power supply (14) for supplying electric power to the electric motor (28), the power supply (14) being located near a pivot part (21) of the rear arm (20) and being connected to the motor control unit (30).

9. Electric motor-operated vehicle according to according to claim 8, **characterized by** further comprising an electric cable (31) interconnecting the power supply (14) and the motor control unit (30) wherein the electric cable (31) is positioned in the rear arm.

10. Electric motor-operated vehicle according to one of the claims 8 or 9, **characterized in that** the power supply (14) is a battery which is positioned with its negative pole nearer to the pivot part (21) than with its positive pole, wherein the negative pole is connected to the motor control unit (30).

11. Electric motor-operated vehicle according to at least one of the claims 1 to 7, **characterized in that** the motor control unit (30) is located more forward on the vehicle (1) than the electric motor (28).

12. Electric motor-operated vehicle according to at least one of the claims 1 to 7, **characterized in that** the motor control unit (30) is located adjacent to the electric motor (28).
